(19) Europäisches Patentamt
European Patent Office
Office européen des brevets

(11) Veröffentlichungsnummer: **0 012 340**
**B1**

# (12) EUROPÄISCHE PATENTSCHRIFT

(45) Veröffentlichungstag der Patentschrift: **16.03.83**

(51) Int. Cl.³: **C 08 L 25/04**, C 08 K 5/16, C 08 K 5/34

(21) Anmeldenummer: **79104924.0**

(22) Anmeldetag: **05.12.79**

(54) **Selbstverlöschende thermoplastische Formmassen und Formteile aus diesen.**

(30) Priorität: **14.12.78 DE 2853992**

(43) Veröffentlichungstag der Anmeldung: **25.06.80 Patentblatt 80/13**

(45) Bekanntmachung des Hinweises auf die Patenterteilung: **16.03.83 Patentblatt 83/11**

(84) Benannte Vertragsstaaten: **BE DE FR GB IT NL SE**

(56) Entgegenhaltungen: **US-A-3 897 373**

(73) Patentinhaber: **BASF Aktiengesellschaft, Carl-Bosch-Strasse 38, D-6700 Ludwigshafen (DE)**

(72) Erfinder: **Hahn, Klaus, Dr., Dipl.-Chem., Burggasse 2, D-6840 Lampertheim (DE)**
Erfinder: **Himmele, Walter, Dr., Dipl.-Chem., Eichenweg 14, D-6909 Walldorf (DE)**
Erfinder: **Naarmann, Herbert, Dr., Dipl.-Chem., Haardtblick 15, D-6719 Wattenheim (DE)**
Erfinder: **Penzien, Klaus, Dr., Dipl.-Chem., Bensheimer Ring 18, D-6710 Frankenthal (DE)**

EP 0 012 340 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Selbstverlöschende thermoplastische Formmassen und Formteile aus diesen

Die Erfindung betrifft selbstverlöschende, thermoplastische Formmassen, die aus Polymerisaten oder Copolymerisatan des Styrols aufgebaut sind und als Flammschutzmittel eine organische Halogenverbindung, insbesondere eine Bromverbindung aufweisen, und als wesentlichen Bestandteil einen halogenfreien Synergisten für das Flammschutzmittel auf Basis einer C–C-labilen Verbindung, enthalten. Der Synergist enthielt als wesentlichen Bestandteil zwei Stickstoffatome von denen jedes Bestandteil eines heterocyclischen Ringsystem ist und die beide an das labile C–C-Brückenglied angebunden sind.

Zum Stand der Technik für die Ausbrüstung von Formmassen mit Falmmschutzmitteln und Synergisten für die Flammschutzmittel nennen wir

1. DE-AS 1 244 395
2. DE-AS 2 525 697
3. DE-OS 2 737 913

In 1. ist bereits ausführlich und zusammenfassend der Stand der Technik abgehandelt (vgl. dazu Spalte 1, Absätze 1 bis 4). In 1. wird vorgeschlagen, um die Wirkung der bromhaltigen Flammschutzmittel zu verbessern, dem Flammschutzmittel in einer Menge von 0,01 bis 5 Gew.-%, bezogen auf die Formmasse, einer synergistisch in bezug auf das Flammschutzmittel wirkenden C–C-labilen Verbindung zuzugeben, die Chlor-, Brom-, Cyan- oder Nitrogruppen als Substituenten enthalten kann. Es ist ausgeführt, dass die Synergisten die Wirkung der bromhaltigen Flammschutzmittel erhöhen. Aus 2. ist die Verwendung von Dehydropolymeren des mono-, di- oder trisubstituierten Benzols, die einen cycloaliphatischen Kohlenstoffwasserstoffrest mit 5 oder 6 Kohlenstoffatomen enthalten sollen als Synergisten in Mengen von 0,05 bis 2 Gew.-% bekannt.

Aus 3. schliesslich sind Halogen enthaltende Flammschutzmittel bekannt, die auf Basis von N,N′-Alkylen-bis-tetrabromphthalimiden aufgebaut sind und bei denen die Alkylengruppe 2 bis 15 Kohlenstoffatome enthält. Es handelt sich bei dieser Verbindungsklasse um Flammschutzmittel, die einen Mindestgehalt von etwa 35 bis 40% an Brom aufweisen und in erheblichen Mengen, nämlich in Mengen von 1 bis 25 Gew.-%, bezogen auf das Gesamtgewicht der flammfest ausgerüsteten Masse angewendet werden müssen. Als Synergisten für dieses Flammschutzmittel werden Zinkborat, Natriumtetraborat, Bleiarsenat u.dgl., insbesondere jedoch Antimonoxid empfohlen. Bei den aus 3. bekannten Verbindungen handelt es sich der Struktur nach um thermostabile Verbindungen, die möglichst auch bei sehr hohen Temperaturen und unter Einfluss von Licht nicht zerfallen sollen.

Die aus 1. bekannten Synergisten haben den Nachteil, dass sie zusätzlich zu dem im Flammschutzmittel vorhandenen Brom weitere Halogen-, Cyan- bzw. Nitrogruppen enthalten können, die im Falle eines Brandes, zu erheblichen Sekundärschäden durch agressive Gase führen können. Es wird deshalb in neuerer Zeit angestrebt, das System Flammschutzmittel und Synergist in bezug auf den Gehalt an aggressive Gase bildenden Substituenten zu erniedrigen. In diese Richtung geht auch die Lehre der Literaturstelle 2. Die Aufgabe der vorliegenden Erfindung bestand darin, den Bromgehalt des Gesamtsystems Flammschutzmittel plus Synergist gegenüber den aus 1. bekannten System insgesamt zu erniedrigen unter Beibehaltung der aus 1. bekannten guten Verlöschzeiten. Gegenüber dem aus 2. bekannten System werden erfindungsgemäss niedrigere Verlöschzeiten der Massen erzielt. Im übrigen bestand auch gegenüber den aus 2. bekannten Synergisten die Aufgabe, weitere halogenfreie Synergisten zur Verfügung zu stellen, die bequem und billig herzustellen sind.

Gegenstand der vorliegenden Erfindung sind daher selbstverlöschende, thermoplastische Formmassen gemäss Anspruch 1.

Unter Polymerisaten oder Copolymerisaten des Styrols im Sinne der vorliegenden Erfindung sind Polystyrol sowie Mischpolymerisate des Styrols, die mindestens 50 Gew.-% Styrol einpolymerisiert enthalten, zu verstehen. Als Monomere, die für die Copolymerisation in Frage kommen, seien genannt -Methylstyrol, Acrylnitril, Methacrylnitril sowie die Ester der Acryl- oder Methacrylsäure von Alkohol mit 1 bis 8 C-Atomen. Ferner seinen angeführt Vinylpyridin, N-Vinyl-Verbindungen wie N-Vinylcarbazol, Butadien oder auch geringe Mengen an Divinylbenzol.

Die Formmassen zur Herstellung selbstverlöschender Formkörper können als Komponente a sogenannte schlagzähe Styrolpolymerisate enthalten. Zu diesen schlagzähen Styrolpolymerisaten rechnet man z.B. Mischungen, die durch Polymerisieren von Styrol eventuell zusammen mit anderen Monomeren in Gegenwart von feinverteilten kautschukartigen Polymerisaten erhalten werden. Man kann solche Polymerisate auch durch Mischen von Styrolacrylnitrilcopolymerisaten mit Butadien- oder Acrylsäureesterpolymerisaten herstellen.

Als Flammschutzmittel kommen organische Haolgenverbindungen in Betracht, es seien genannt: chlorierte Paraffine, chlorierte Phenole, Ammonchlorid und chlorierte Ester von Carbon- bzw. Dicarbonsäuren. Insbesondere werden jedoch organische Bromverbindungen als Flammschutzmittel verwendet.

Als besonders geeignete Brom enthaltende Flammschutzmittel seien genannt: Tetrabrombutan, Dibromäthylbenzol, Hexabrombenzol, Hexabrombuten-2, bromierte Ketone, Tribromphenylallyläther, Ester oder Acetale des Dibrompropanols, wie tris-(Dibrompropyl)-phosphat, ausserdem Pentabromdiphenyläther. Besonders geeignet sind solche organischen Bromverbindungen, die schwer flüchtig sind und die nicht, oder nur in geringem Masse als Weichmacher wirken

und keinen unangenehmen Geruch besitzen. Hierfür sind insbesondere Bromierungsprodukte von Butadien- oder Isoprenoligomeren oder Polymeren wie 1,2,6,5,9,10-Hexabromcyclododecan oder das Octabromhexadecan sowie bromierte Natur- und Synthesekautschuke zu nennen.

Der Halogen-Gehalt des Flammschutzmittels soll, bezogen auf das Molekül mindestens 35% betragen, es wird in Mengen von mindestens 0,1 Gew.-% und nicht mehr als 5%, bezogen auf die Formmasse, angewendet. Es wird bevorzugt, nicht mehr als etwa 0,3 bis 1 Gew.-% Halogen, insbesondere Brom, bezogen auf die Gesamtmasse zu verwenden.

Als wesentlichen Bestandteil erhalten die Formmassen gemäss vorliegender Erfindung halogenfreie Synergisten für das Flammschutzmittel. Diese Synergisten sind auf Basis C–C-labiler Verbindungen aufgebaut, wobei die C–C-Brücke vollständig substituiert ist. Es sind sowohl symmetrisch als auch unsymmetrisch, bezüglich der Brücken-C-Atome, substituierte Verbindungen geeignet. Dies gilt auch in bezug auf die an den Brücken-C-Atomen angegliederten, stickstoffaufweisenden Ringsysteme. Die erfindungsgemäss anzuwendenden Synergisten können durch die nachfolgende allgemeine Strukturformel

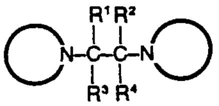

beschrieben werden. Die Substituenten $R^1$ bis $R^4$ an dem Brückenglied können für lineare oder verzweigte gesättigte Alkylreste mit 1 bis zu 10 C-Atomen sein. Es ist möglich, dass die Substituenten $R^1$ bis $R^4$ gleich, oder dass bis zu vier verschiedene Substituenten gleichzeitig an diesem Brückenglied angreifen. Die Substituenten können ferner Cycloaliphaten mit mindestens 5 C-Atomen, insbesondere jedoch mit 5 und 6 C-Atomen sein, ausserdem können die cycloaliphatischen Reste substituiert sein, so dass die gesamte C-Zahl bis zu 10 C-Atome betragen kann. Besonders bevorzugte Substituenten an den Brücken-C-Atomen $R^1$ bis $R^4$ sind gleiche oder ungleiche Substituenten von $R^1$ bis $R^4$ = Methyl; $R^1 + R^2$ = Methyl; $R^3 + R^4$ = Äthyl oder Propyl, Isopropyl, Butyl bzw. Tertiärbutyl.

Bezüglich der heterocyclischen Ringsysteme, ist auszuführen, dass diese sich im wesentlichen von cyclischen Imiden oder Amiden ableiten, die im wesentlichen einem gesättigten oder ungesättigten 4- oder 5-Ring angehören. An dieses 4- oder 5-gliedrige Ringsystem kann gegebenenfalls ein aromatischer Kern angegliedert bzw. Bestandteil dieses Ringsystems sein. Das aromatische System kann gegebenenfalls durch Alkylgruppen substituiert sein (Kohlenstoffzahl $C_1$ bis $C_4$ bevorzugt).

Das die Amid- oder Imidgruppe enthaltende heterocyclische Ringsystem ist bevorzugt ein 5- bzw. 6-gliedriges Ringsystem mit Stickstoff als Heteroatom. Beispielsweise seinen von den gesättigten Dicarbonsäuren genannt: das Bernsteinsäureimid sowie das Imid der Glutarsäure. Die entsprechenden Amide der Monocarbonsäuren sind Buttersäureamid sowie Valeriansäureamid, mit 5- bis 6gliedrigen Lactamringstrukturen. Von den Lactamen sind noch das Lactam der Capronsäure sowie das Imid der Adipinsäure, die beide einen 7-Ring aufweisen, zu nennen.

Von den ungesättigten Vertretern, ist vorzugsweise das einen 5-Ring bildende Maleinsäureimid zu nennen. Von den vorstehend genannten Vertretern, die Stickstoff als Heteroatom in einem gesättigten oder ungesättigten 4-, 5- bzw. 7gliedrigen Ringsystem aufweisen, können auch die substituierten Verbindungen verwendet werden. Es seien genannt, die alkylsubstituierten Vertreter Alkyl = $CH_3$, $C_2H_5$- bzw. Propyl oder Butyl, und auch Alkenyl-, wie Vinyl-, insbesondere für das Bernsteinsäureimid.

Das heterocyclische Ringsystem kann jedoch auch ein aromatisches System ankondensiert enthalten, stellvertretend hierfür seien genannt, das Phthalsäureimid bzw. das 3-, 4-Benzpyrrolidon-2. Diese Vertreter können beispielsweise an den aromatischen Ringsystemen durch Alkyl ein- oder mehrfach substituiert sein, wobei die Alkylgruppe 1 bis 4 C-Atome aufweisen kann. Beim Benzpyrazolon kann auch das dem Heteroatom benachbarte Kohlenstoffatom gegebenenfalls substituiert sein.

Die Formmasse enthält 0,1 bis 1 Gew.-%, vorzugsweise 0,2 bis 0,5 Gew.-%, bezogen auf das Polymerisat, von einer oder mehreren synergistisch wirkenden Verbindungen.

In den Formmassen können noch weitere übliche Komponenten enthalten sein, z.B. Füllstoffe, Farbpigmente, Gleitmittel, Weichmacher, Antistatika, Alterungsschutzmittel, Stabilisatoren oder solche Verbindungen, die die Schaumbildung fördern.

Die Formmassen können in feinteiliger Form, z.B. in Perlform, in Form zylindrischer Granulate oder in Form von Brocken vorliegen, wie sie beim Mahlen von Substanzpolymerisaten erhalten werden. Die Teilchen haben vorteilhaft einen Durchmesser von 0,1 bis 6 mm, vorzugsweise von rund 0,4 bis 3 mm.

Die Formmassen können beispielsweise durch Spritzgiessen oder Strangpressen zu selbstverlöschenden Formkörpern oder Profilen verarbeitet werden. Aufgrund ihres relativ geringen Gehaltes an organischen Halogenverbindungen haben die erfindungsgemässen Formmassen Erweichungspunkte, die sich von denen der in ihnen enthaltenen Polymerisate geringfügig unterscheiden.

Besondere Bedeutung haben Formmassen, die sich zur Herstellung selbstverlöschender schaumförmiger Gebilde eignen. Sie enthalten neben Styrolpolymerisaten, organischen Bromverbindungen und den synergistisch wirkenden Verbindungen ein Treibmittel.

Als Treibmittel enthalten die Formmassen zweckmässig übliche flüssige oder gasförmige organische Verbindungen, die das Polymerisat

nicht lösen und deren Siedepunkt unterhalb des Erweichungsproduktes des Polymerisates liegt, z. B. aliphatische oder cycloaliphatische Kohlenwasserstoffe, wie Propan, Butan, Pentan, Hexan, Heptan, Cyclohexan oder Halogenkohlenwasserstoffe, wie Methylchlorid, Dichlordifluormethan oder 1,2,2-Trifluor-1,1,2-trichloräthan. Auch Mischungen der Treibmittel können in den Massen enthalten sein. Es ist vorteilhaft, 3 bis 12 Gew.-%, bezogen auf das Styrolpolymerisat, an Treibmittel zu verwenden.

Aus derartigen verschäumbaren Formmassen werden z. B. selbstverlöschende Schaumstoffkörper erhalten, wenn man feine Teilchen dieser Masse in gasdurchlässigen Formen auf Temperaturen oberhalb des Erweichungspunktes der in den Massen enthaltenen Polymerisate erhitzt, so dass die Teilchen expandieren und zu Formkörpern verschweissen. Solche verschäumbaren Formmassen können auch mit Hilfe von Extrudern zu Schaumfolien verarbeitet werden.

Zur Herstellung von selbstverlöschenden schaumförmigen Bahnen oder Folien können die einzelnen Komponenten der Formmassen zusammen mit einem Treibmittel gemischt werden. Das Mischen wird vorteilhaft in einer kontinuierlich arbeitenden Mischvorrichtung, z. B. in einem Extruder, vorgenommen. Man arbeitet bei Temperaturen, die oberhalb des Erweichungspunktes der Kunststoffe liegen. Die Mischungen sollen unter einem Druck gehalten werden, der mindestens gleich dem Druck des Treibmittels ist. Hierdurch wird vermieden, dass die Mischungen bereits während des Mischvorganges bzw. während des Erhitzens auf Temperaturen oberhalb ihres Erweichungspunktes aufschäumen. Unter dem Druck des Treibmittels ist der Druck zu verstehen, der sich bei der entsprechenden Temperatur einstellt. Werden organische Flüssigkeiten als Treibmittel verwendet bzw. gasförmige Verbindungen unterhalb der kritischen Temperatur, dann entspricht der Treibmitteldruck dem Dampfdruck des Treibmittels, der sich über der Mischung aus dem thermoplastischen Kunststoff und dem Treibmittel ausbildet.

Die Mischungen werden in eine Zone von geringerem Druck ausgepresst. Der Druck soll also in dieser Zone unter dem Treibmitteldruck bei der herrschenden Temperatur liegen, so dass die Mischungen aufschäumen. In den meisten Fällen ist es am zweckmässigsten, die Mischungen in eine unter Normaldruck stehende Zone auszupressen. Mitunter kann es vorteilhaft sein, den Druck in der Zone unter Normaldruck zu halten.

Zur Herstellung der Formmassen können die Synergisten mit den organischen Bromverbindungen oder auch einzeln nacheinander mit dem Styrolpolymerisat und gegebenenfalls noch mit weiteren Komponenten gemischt werden. Man kann sie beispielsweise auf der Walze, im Extruder in einem Kneter in den Kunststoff einbringen. Sie können wie üblich in vielen Fällen bereits vor der Polymerisation den Monomeren zugesetzt werden. Auch ist es möglich, z. B. bei der Herstellung von Giessfolien, die Synergisten zusammen mit der Bromverbindung einer Lösung des Kunststoffes zuzusetzen und das Lösungsmittel abzudampfen.

Es ist ein besonderer Vorteil, dass die synergistisch wirkenden Verbindungen die Polymerisation des Styrols nicht stören. Zur Herstellung der Formmassen können die Monomeren daher in Gegenwart der erfindungsgemäss verwendeten Synergisten sowie der organischen Bromverbindungen polymerisiert werden. Auf diese Weise erhält man eine besonders homogene Verteilung von Flammschutzmitteln und der synergistisch wirkenden Verbindungen in der Masse. Es ist weiterhin von Vorteil, dass die Handhabung des Synergisten im Vergleich zu anderen die Wirkung der organischen Bromverbindung steigernden Substanzen ungefährlich ist. Es zeigte sich ausserdem, dass die Eigenschaft des Selbstverlöschens der Massen selbst bei längerem Lagern bei höheren Temperaturen nicht verlorengeht. Ein besonderer Vorteil ist es jedoch, dass die synergistisch wirkenden Verbindungen nicht flüchtig sind. Somit sind die Massen physiologisch unbedenklich.

Die aus den Formmassen hergestellten selbstverlöschenden Formkörper werden auf folgende Weise geprüft: Zur Prüfung ungeschäumter Massen werden Formkörper mit der Abmessung 0,1 · 10 · 30 cm, zur Prüfung geschäumter Massen solche mit der Abmessung 0,5 · 15 · 40 cm 5 Sekunden lang in eine Gasflamme von 40 mm Flammhöhe gehalten und die Flamme anschliessend mit ruhiger Bewegung entfernt. Die Verlöschzeit des Formkörpers nach Entfernen aus der Flamme ist ein Mass für dessen Flammwidrigkeit. Ungenügend oder nicht schwerentflammbar ausgerüstete Formmassen brennen nach Entfernen aus der Flamme vollständig ab.

Für die in den Beispielen beschriebenen Formmassen wurden die nachfolgend genannten Synergisten verwendet.

Synergist

a 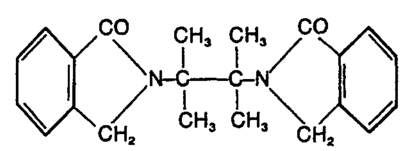

b 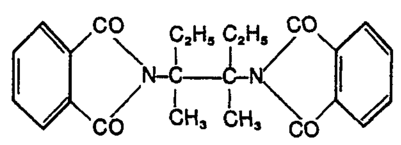

c 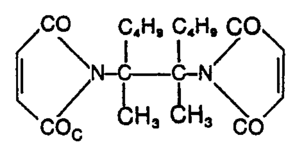

d 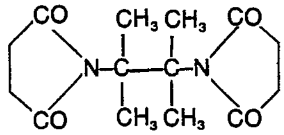

e 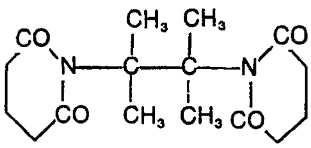

f 1,1′-Diphenylbicyclohexyl nach DE-AS 2 525 697 (2)

g 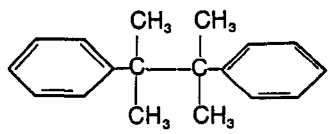

nach DE-AS 1 244 395 (1)

Die Erfindung wird durch die nachstehenden Beispiele näher erläutert. Die in den Beispielen genannten Teile und Prozente beziehen sich auf das Gewicht.

Beispiele 1 bis 5

Es werden jeweils 30 Teile eines Styrolpolymerisates, 1 Gew.-% HBCD (Hexabromcyclododekan) sowie 0,2 Gew.-% eines bestimmten Synergisten in 100 Teilen Methlenchlorid gelöst. Der Lösung werden 3 Teile Pentan zugesetzt. Danach giesst man die Lösung auf eine Glasplatte aus und lässt das Methylenchlorid bei Raumtemperatur verdunsten. Dabei verbleibt das Pentan in homogener Verteilung in der Mischung. Die so erhaltene Folie wird in Wasserdampf von 100 °C aufgeschäumt und im Vakuum bei 35 °C für die Dauer von 12 Stunden getrocknet. Die erhaltenen Schaumstoffolien werden nach der oben angegebenen Methode auf ihre Entflammbarkeit geprüft. Die Ergebnisse sind in der Tabelle wiedergegeben.

Vergleichsversuche 6 und 7

Wie in den Beispielen 1 bis 5 beschrieben, wurden mit den vorstehend unter f und g genannten Verbindungen Schaumstoffolien hergestellt und auf ihre Entflammbarkeit geprüft. Die Ergebnisse sind in der Tabelle den in den Beispielen 1 bis 5 erhaltenen Ergebnissen gegenübergestellt. Als Messgrösse wurde die Verlöschzeit in Sekunden aufgetragen.

Tabelle:

| Beispiel | Synergist Art | Verlöschzeit in Sekunden |
|---|---|---|
| 1 | a | 1,0 |
| 2 | b | 1,5 |
| 3 | c | 2 |
| 4 | d | 2,5 |
| 5 | e | 2 |
| Vergl. 6 | f | 4,5 |
| Vergl. 7 | g | 6,5 |

**Patentansprüche**

1. Selbstverlöschende, thermoplastische Formmasse, enthaltend

a) Polymerisate oder Copolymerisate des Styrols

b) organische Halogenverbindungen als Flammschutzmittel in Mengen von 0,1 bis 5 Gew.-%, bezogen auf die Formmasse,

c) halogenfreie Synergisten für die Flammschutzmittel auf Basis –C–C–labiler Verbindungen, in Mengen von 0,1 bis 1 Gew.-%, bezogen auf das Polymerisat, sowie

d) gegebenenfalls übliche weitere Zusätze,

dadurch gekennzeichnet, dass man als Synergisten Verbindungen verwendet, die mindestens je eine Amid- und Imidgruppierung oder Mischungen dieser Gruppierungen gebunden an das –C–C–Brückenglied gemäss folgender Formel

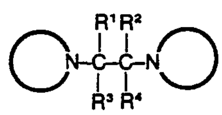

enthalten, wobei $R^1$ bis $R^4$ für lineare oder verzweigte gesättigte Alkylreste mit 1 bis 10 C-Atomen oder für gesättigte cyclische, gegebenenfalls substituierte Aliphaten mit 5 bis 10 C-Atomen steht.

2. Formmassen nach Anspruch 1, dadurch gekennzeichnet, dass die Polymerisate Kautschuke als Schlagzähmodifizierer enthalten.

3. Formteile aus Massen nach Anspruch 1.

4. Formteile aus Massen nach Anspruch 1, hergestellt durch Expandieren mit Treibmitteln.

**Claims**

1. Flame-retardant thermoplastic moulding materials comprising

(a) polymers or copolymers of styrene,

(b) organic halogen compounds as flame retardants, in amounts of from 0.1 to 5% by weight, based on the moulding material,

(c) halogen-free synergists for the flame retardants, the synergists being based on compounds having labile –C–C– bonds and being present in

amounts of from 0.1 to 1% by weight, based on the polymer, and

(d), if desired, further conventional additives, wherein there are used as synergists compounds which contain at least one amide and imide grouping each or mixtures of these groupings bonded to the –C–C–bridge member according to the following formula

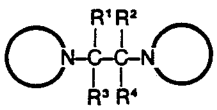

where $R^1$, $R^2$, $R^3$ and $R^4$ are linear or branched saturated alkyl radicals containing 1 to 10 carbon atoms or saturated, optionally substituted cycloaliphatic radicals containing 5 to 10 carbon atoms.

2. Moulding materials as claimed in claim 1, wherein the polymers contain rubbers as impact-resistant modifiers.

3. Moulded articles made from moulding materials as claimed in claim 1.

4. Moulded articles made from moulding materials as claimed in claim 1 and produced by expansion with blowing agents.

**Revendications**

1. Matière à mouler thermoplastique auto-extinguible, contenant:

a) des polymérisats ou compolymérisats du styrène,

b) des composés organiques halogénés comme retardateurs de la combustion en une proportion de 0,1 à 5% du poids de la matière à mouler,

c) des agents de synergie pour les retardateurs de la combustion, exempts d'halogène, à base de composés à liaison –C–C– labile en une proportion de 0,1 à 1% du poids du polymérisat, et éventuellement

d) d'autres additifs usuels,

caractérisée en ce que les agents de synergie sont choisis parmi les composés comprenant au moins un groupe amide et au moins un groupe imide, ou un mélange de tels groupes, liés au pont –C–C– comme indiqué par la formule ci-dessous:

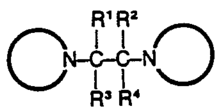 ,

dans laquelle $R^1$ à $R^4$ peuvent désigner des radicaux alcoyle saturés en $C_1$ à $C_{10}$ à chaîne droite ou ramifiée ou des groupes aliphatiques cycliques saturés en $C_5$ à $C_{10}$, éventuellement substitués.

2. Matières à mouler suivant la revendication 1, caractérisé en ce que les polymérisats contiennent des caoutchoucs pour en modifier la résistance aux chocs.

3. Pièces moulées en une matière selon la revendication 1.

4. Pièces moulées en une matière selon la revendication 1, fabriquées par expansion à l'aide d'agents porogènes.